# EUROPÄISCHE PATENTANMELDUNG

(11) **EP 1 594 304 A1**
(43) Veröffentlichungstag der Anmeldung: **09.11.2005**
(21) Anmeldenummer: 04010724.5
(22) Anmeldetag: 05.05.2004
(51) Int. Cl.: H04N 1/60

(54) **Übermittlungsverfahren für digitale Farbdokumente**

(71) Anmelder: GretagMacbeth AG, 8105 Regensdorf (CH)
(72) Erfinder: Beyer, Martin, 59192 Bergkamen (DE); Lamy, Francis, 8832 Wollerau (CH); Senn, Thomas, 8157 Dielsdorf (CH); Mangelschots, Iris, 8802 Kilchberg/ZH (CH)
(74) Vertreter: Schwabe - Sandmair - Marx

(57) **Zusammenfassung**

Auf einem ersten Rechner (1) wird mittels einer grafischen Anwendung mit Farbverwaltung unter Berücksichtigung eines Monitorprofils ein digitales Farbdokument erstellt oder bearbeitet. Die digitalen Daten des Farbdokuments (12) werden zusammen mit dem zugrundeliegenden Monitorprofil (13) in ein digitales Container-Dokument (3) eingepackt und an einen zweiten Rechner (2) übermittelt. Im zweiten Rechner (2) wird das Container-Dokument (3) entpackt, wobei die Daten des Farbdokuments (12) und das zugrundeliegende Monitorprofil (13) wiedergewonnen werden. Das entpackte Monitorprofil (13) wird mit einem im zweiten Rechner (2) aktiven lokalen Monitorprofil (23) verglichen, und das Vergleichsresultat (22) wird auf dem Monitor des zweiten Rechners (2) angezeigt.

## Beschreibung

Die Erfindung betrifft ein Verfahren zur Übermittlung eines auf einem ersten Rechner mittels einer Color Management fähigen grafischen Anwendung unter Beizug eines Monitorprofils erstellten oder bearbeiteten digitalen Farbdokuments an mindestens einen zweiten Rechner gemäss dem Oberbegriff des unabhängigen Anspruchs.

In der klassischen Arbeitsweise unterbreitete der Fotograf oder der Designer seine Arbeit dem Kunden in Form von körperlichen Bildern (Aufsichtsbilder oder Diapositive). Die Bilder wurden in Taschen verpackt und dem Kunden per Post zugestellt. Der Kunde konnte die Bilder unter kontrollierten Lichtverhältnissen begutachten. Diese Vorgehensweise stellte sicher, dass keine Missverständnisse bezüglich der Farben der Bilder auftreten konnten.

Mit dem Aufkommen der Digitalfotografie hat sich die Situation dramatisch verändert. Heute werden Bilder in digitaler Form als Bits und Bytes übermittelt, und die einzige Möglichkeit sicherzustellen, dass die Farbinformation korrekt wiedergegeben wird, besteht in der Verwendung von ICC Farbprofilen. Professionelle Fotografen kennen diese Schwierigkeiten des digitalen Arbeitsflusses und auch die Mittel und Wege, um damit zurechtzukommen. Kunden andererseits sind nicht notwendigerweise mit ICC Techniken vertraut, möchten aber doch von den inhärenten Vorteilen digitaler Arbeitsflüsse (z.B. stark reduzierte Zeit zwischen Aufnahme und Vorlage) profitieren. Digitale Aufnahmen werden üblicherweise via E-Mail oder auf CD an den Kunden geschickt, und der Kunde kann sich die Aufnahmen am Bildschirm seines Rechners ansehen. Anders als in der klassischen analogen Welt ist dabei aber keine körperliche Referenz ("hard reference") mehr vorhanden, so dass es leicht und oft zu Missverständnissen und Unzufriedenheiten bezüglich der Farben der Aufnahmen kommen kann.

Diese Schwierigkeiten sollen nun durch die vorliegende Erfindung behoben werden. Konkreter soll eine Möglichkeit geschaffen werden, dem Empfänger von digitalen Farbdokumenten (z.B. digitalen Aufnahmen) eine Information darüber zu geben, ob er beim Betrachten der Dokumente auf seinem Bildschirm eine korrekte Farbwiedergabe erwarten darf oder nicht.

Diese der Erfindung zugrundeliegende Aufgabe wird durch das durch die Merkmale des unabhängigen Anspruchs gekennzeichnete erfindungsgemässe Verfahren gelöst.

Vorteilhafte Ausgestaltungen und Weiterbildungen des erfindungsgemässen Verfahren sind Gegenstand der abhängigen Ansprüche.

Im folgenden wird die Erfindung anhand der Zeichnung näher erläutert. Es zeigen:
- Fig. 1: ein grundsätzliches Blockschema eines Ausführungsbeispiels des erfindungsgemässen Verfahrens und
- Fig. 2: ein Flussdiagramm des Verfahrens.

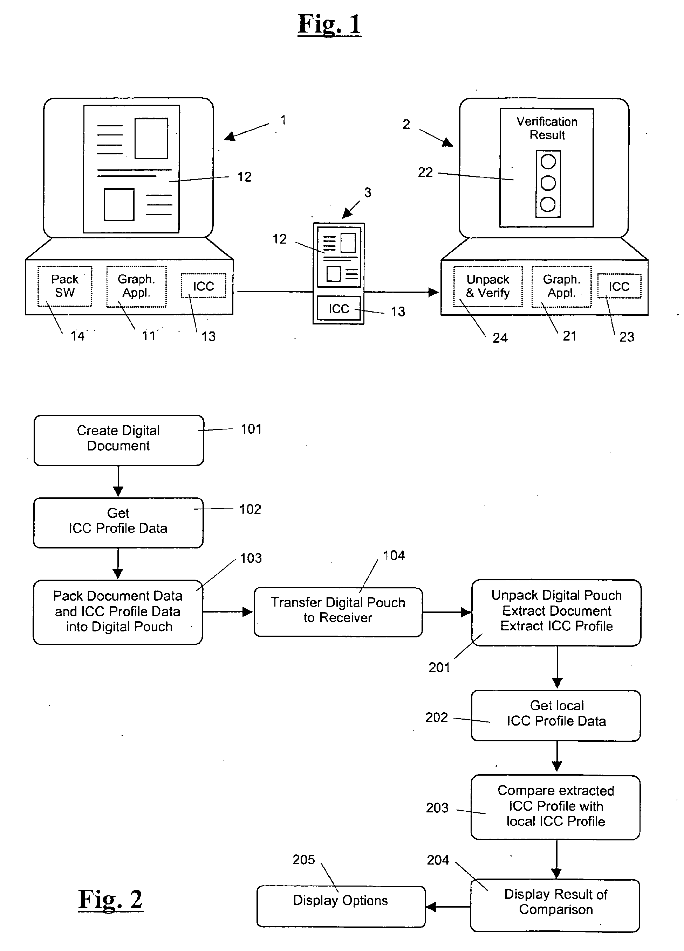

In Fig. 1 sind die am erfindungsgemässen Verfahren beteiligten Komponenten schematisch dargestellt. Mit 1 ist ein Rechner eines Fotografen bezeichnet, mit 2 ein Rechner eines Kunden, der vom Fotografen erstellte digitale Farbdokumente (in der Regel digitale Bilder) erhält und begutachten möchte.

Auf dem Rechner 1 des Fotografen läuft eine Color Management fähige grafische Applikation 11, mittels welcher der Fotograf ein Farbdokument 12 erstellt oder bearbeitet. Darunter ist zum Beispiel das Auswählen von Bildausschnitten und das digitale Retouchieren von digitalen fotografischen Aufnahmen zu verstehen, die zuvor in die Applikation eingelesen wurden. Bei diesen Tätigkeiten ist ein im Rechner 1 gespeichertes ICC-Monitor-Profil 13 aktiv, welches für eine farbgetreue Darstellung auf dem Monitor des Rechners sorgt. Im Ablaufschema der Fig. 2 ist dieser Verfahrensschritt mit 101 bezeichnet.

Wenn der Fotograf mit seiner Arbeit fertig ist, das Farbdokument 12 also fertig erstellt oder bearbeitet ist, packt er die digitalen Daten des Farbdokuments 12 in ein digitales Container-Dokument 3 ein und speichert dieses ab. Dabei kann es sich z.B. um ein gängiges digitales Archiv-Format handeln. Zusammen mit dem Farbdokument 12 werden die Daten des aktiven ICC-Monitor-Profils 13 oder zumindest dessen wichtigste Kenngrössen (Grundfarben, Weisspunkt, Luminanz) in das digitale Container-Dokument 3 eingepackt. Das Ermitteln der Profil-Daten und das Einpacken derselben und des digitalen Farbdokuments 12 in das Container-Dokument 3 erfolgt mittels eines auf dem Rechner 1 laufenden Pack-Programms 14. Die entsprechenden Arbeitsschritte sind in Fig. 2 mit 102 und 103 bezeichnet. Zusätzlich zum Monitor-Profil 13 können auch noch weitere Profile (z.B. das Profil der Digital-Kamera, mit der die Aufnahmen gemacht wurden, oder Farbraum-Profile) in das digitale Container-Dokument 3 mit eingepackt werden. Das Container-Dokument 3 ist also gewissermassen das digitale Analogon zur herkömmlichen Versandtasche und wird deshalb hier auch als "Digital Pouch" bezeichnet.

Das fertige Container-Dokument 3 wird nun über ein geeignetes Transport-Medium (z.B. per E-Mail oder via CD) an den Kunden übermittelt (Arbeitsschritt 104).

Der Kunde empfängt das digitale Container-Dokument 3 auf seinem Rechner 2 und öffnet es mittels eines dort laufenden Entpack-und Prüf-Programms 24. Dabei werden die Daten des digitalen Farbdokuments 12 und alle mit eingepackten Profil-Daten, insbesondere auch das zugrundeliegende ICC-Monitor-Profil 13 entpackt bzw. wiederhergestellt.. Dieser Schritt ist in Fig. 2 mit 201 bezeichnet.

Auf dem Rechner 2 des Kunden ist eine grafische Applikation 21 installiert, mittels welcher das entpackte digitale Farbdokument 12 auf dem Monitor des Rechners dargestellt werden kann. Vorzugsweise ist auf dem Rechner 2 des Kunden auch ein lokales ICC-Monitor-Profil 23 aktiv.

Das Entpack- und Prüfprogramm 24 ermittelt nun die Daten des lokalen ICC-Monitor-Profils 23 (sofern überhaupt vorhanden) und vergleicht diese mit den Daten des aus dem digitalen Container-Dokument 3 extrahierten Monitor-Profils 13 (Schritte 202 und 203 in Fig. 2). Dabei wird untersucht, ob überhaupt ein lokales Monitor-Profil aktiv ist, und zutreffendenfalls wie weit es mit dem Monitor-Profil übereinstimmt. Je besser die Übereinstimmung, desto besser ist die zu erwartende Farbtreue bei der Darstellung des Farbdokuments auf dem Monitor des Rechners 2 des Kunden.

Das Ergebnis dieser Überprüfung bzw. des Vergleichs der Profil-Daten wird dann vom Pack- und Prüfprogramm 24 auf dem Monitor angezeigt, und zwar vorzugsweise in Form von einfachen und für den Benutzer leicht verständlichen Bildschirmmeldungen 22. Beispielsweise kann eine Ampel-artige Signalisationsform mit den Ampelfarben grün, gelb und rot vorgesehen sein. Eine grün anzeigende Ampel würde besignalisieren, dass eine farbgetreue Darstellung des Farbdokuments zu erwarten ist. Die Farbe rot würde das Gegenteil bedeuten und eine gelb anzeigende Ampel würde den Benutzer darauf hinweisen, dass er mit kleineren Farbabweichungen rechnen muss. Der entsprechende Arbeitsschritt ist in Fig. 2 mit 204 bezeichnet. Für das Entpacken des digitalen Container-Dokuments 3 und die Überprüfung der Monitor-Profil-Daten können selbstverständlich auch separate Programme eingesetzt werden.

Das Entpack- und Prüfprogramm 24 (oder ein separates Prüfprogramm) kann auch noch weitere Funktionen umfassen, die dem Benutzer in Abhängigkeit vom Prüf- bzw. Vergleichsergebnis passende Optionen zur Problembehebung anbieten oder auf solche Optionen hinweisen. Zum Beispiel kann der Benutzer beim Fehlen eines aktiven lokalen Monitor-Profils darauf hingewiesen und aufgefordert werden, ein Profil zu erzeugen und zu installieren. Bei einem unpassenden oder schon ein gewisses Alter aufweisenden Monitor-Profil kann ein ähnlicher Hinweis erfolgen. Ferner kann auch eine Aufforderung zur Neu-Kalibrierung des Monitors erfolgen, und eventuell kann sogar eine programmtechnische Unterstützung zur Durchführung der vorgeschlagenen bzw. durchzuführenden Aktionen geboten werden. Die Anzeige von situativ sinnvollen Optionen für die Reaktion auf das Vergleichsergebnis ist in Fig. 2 mit 205 bezeichnet.

### Bezugszeichen

- 1: erster Rechner
- 2: zweiter Rechner
- 3: digitales Container-Dokument
- 11: grafische Applikation
- 12: digitales Farbdokument
- 13: ICC-Monitor-Profil
- 14: Pack-Programm
- 21: grafische Applikation
- 22: Bildschirmmeldung, Ergebnis bzw. Resultat der Überprüfung bzw. des Vergleiches
- 23: ICC-Monitor-Profil
- 24: Entpack- bzw. Wiederherstellungs- und Prüfprogramm
- 101: digitales Dokument erstellen
- 102: ICC-Profil-Daten ermitteln
- 103: Daten des Dokuments und ICC-Profil-Daten in eine "Digital Pouch" einpacken
- 104: digitale Pouch an den Empfänger übermitteln
- 201: digitale Pouch entpacken bzw. wiederherstellen
Dokument extrahieren
ICC-Profil extrahieren
- 202: lokale ICC-Profil-Daten ermitteln
- 203: extrahiertes ICC-Profil mit-lokalem ICC-Profil vergleichen
- 204: Vergleichsergebnis anzeigen
- 205: Optionen anzeigen

## Patentansprüche

1. Verfahren zur Übermittlung eines auf einem ersten Rechner mittels einer Color Management fähigen grafischen Anwendung unter Beizug eines Monitorprofils erstellten oder bearbeiteten digitalen Farbdokuments an mindestens einen zweiten Rechner, **dadurch gekennzeichnet, dass** im ersten Rechner (1) die digitalen Daten des zu übertragenden Farbdokuments (12) zusammen mit dem zugrundeliegenden Monitorprofil (13) in ein digitales Container-Dokument (3) eingepackt werden, dass das Container-Dokument (3) an den zweiten Rechner (2) übermittelt wird, dass im zweiten Rechner (2) das Container-Dokument (3) entpackt und dabei die Daten des Farbdokuments (12) und das zugrundeliegende Monitorprofil (13) wiedergewonnen werden, dass das entpackte Monitorprofil (13) mit einem im zweiten Rechner (2) aktiven lokalen Monitorprofil (23) verglichen wird, und dass das Vergleichsresultat (22) auf dem zweiten Rechner (2) angezeigt wird.

2. Verfahren nach Anspruch 1, **dadurch gekennzeichnet, dass** das Vergleichsresultat (22) als einer von zwei oder drei möglichen Zuständen angezeigt wird.

3. Verfahren nach Anspruch 1 oder 2, **dadurch gekennzeichnet, dass** auf dem zweiten Rechner (2) in Abhängigkeit vom Vergleichsresultat (22) Optionen zur Reaktion auf das Vergleichsresultat angezeigt werden.
